# FASCICULE DE BREVET EUROPEEN

(11) **EP 2 475 961 B1**
(45) Date de publication et mention de la délivrance du brevet: **06.05.2015**
(21) Numéro de dépôt: 10752778.0
(22) Date de dépôt: 06.09.2010
(51) Int. Cl.: G01C 21/16, G01S 19/20

(54) **PROCEDE ET SYSTEME DE DETERMINATION DE LIMITES DE PROTECTION AVEC EXTRAPOLATION INTEGRE SUR UN HORIZON TEMPOREL DONNE**
VERFAHREN UND SYSTEM ZUR BESTIMMUNG VON SCHUTZGRENZEN MIT INTEGRIERTER EXTRAPOLATION ÜBER EINEN BESTIMMTEN ZEITHORIZONT
METHOD AND SYSTEM FOR DETERMINING PROTECTION LIMITS WITH INTEGRATED EXTRAPOLATION OVER A GIVEN TIME HORIZON

(30) Priorité: 07.09.2009 FR 0956070
(43) Date de publication de la demande: 18.07.2012
(73) Titulaire: Sagem Défense Sécurité, 92100 Boulogne-Billancourt (FR)
(72) Inventeur: SZELEWA, Stanislas, F-75015 Paris (FR)
(74) Mandataire: Regimbeau
(86) Numéro de dépôt international: PCT/EP2010/063011
(87) Numéro de publication internationale: WO 2011/026961

(56) Documents cités:
- EP-A1- 2 006 707
- EP-A2- 2 081 043
- WO-A1-03/029755
- US-B1- 6 847 893

## Description

Le domaine de l'invention est celui de l'intégrité d'un système de navigation d'un porteur.

Par intégrité on entend la mesure de confiance dans les états de navigation (positions, vitesses, attitudes) du porteur estimés par le système de navigation, exprimée comme la probabilité que l'erreur entre la valeur estimée et la valeur réelle d'un état de navigation dépasse une limite de protection.

L'invention concerne un procédé et un système de détermination d'une ou plusieurs limites de protection associées à un ou plusieurs états de navigation d'un porteur, et vise plus précisément à fournir des limites de protection temporellement cohérentes des états de navigation à protéger.

Classiquement, la localisation d'un porteur, tel qu'un aéronef, est réalisée à partir, d'une part, de données fournies par une centrale de mesure embarquée (incluant par exemple une centrale inertielle et un baroaltimètre) et, d'autre part, de données issues de signaux satellitaires GNSS (Global Navigation Satellite System) provenant d'une constellation de satellites en orbite autour de la Terre. Le traitement combiné de ces données, par exemple au moyen d'un filtre de Kalman, permet de déterminer l'état de l'aéronef, c'est-à-dire notamment une position, une vitesse et une attitude précises proches de l'état réel de l'aéronef.

Entre les réceptions de signaux satellitaires, les états de navigation de l'aéronef sont extrapolés ou estimés à partir des données inertielles appliquées aux derniers états calculés. Les états ainsi déterminés sont périodiquement recalés à chaque réception de signaux satellitaires. La précision des états de navigation calculés est toutefois fortement sensible à une défaillance de la constellation de satellites, c'est-à-dire en cas d'une défaillance d'un satellite qui affecterait l'exactitude des données transmises et qui ne serait pas détectée, ou en cas d'une défaillance simultanée ou de défaillances consécutives de deux satellites de la constellation (le risque de défaillance simultanée de trois satellites est tellement faible qu'il est en général négligé).

Il est pour cette raison habituel de fournir au pilote de l'aéronef une limite ou un volume, dit de protection, centré sur la position calculée et représentatif de la précision de cette position en tenant compte du risque de défaillance d'un ou deux satellites. Le volume global de protection est un cylindre d'axe vertical défini par son rayon et sa demie-hauteur usuellement nommés HPL (Horizontal Protection Limit) et VPL (Vertical Protection Limit). La position réelle de l'aéronef, si elle ne coïncide pas exactement avec la position calculée, a une probabilité au plus égale à un seuil de sécurité acceptable (ou risque d'intégrité) de se trouver hors du volume global de protection. Cette notion de limite de protection s'étend facilement aux autres états de navigation (vitesses et attitudes).

L'intégrité mesure ainsi la confiance dans les estimées des états de navigation (positions, vitesses, attitudes). Pour un état de navigation de l'aéronef donné, si la valeur réelle ne coïncide pas exactement avec la valeur estimée par le système de navigation, elle a une probabilité au plus égale au risque d'intégrité (typiquement 10⁻⁷ par heure de vol) de se trouver au-delà de la limite de protection associée (valeur positive homogène à l'état de navigation considéré).

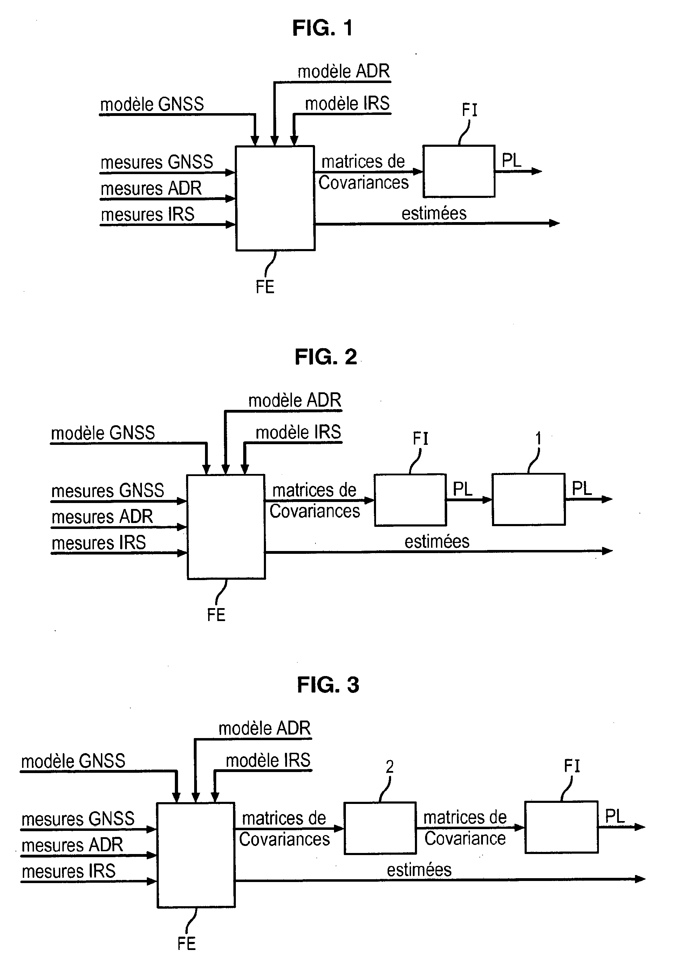

Les calculs d'intégrité, basés sur la combinaison de modèles statistiques et bien connus de l'homme du métier, sont généralement établis à partir de l'architecture haut-niveau représentée en figure 1.

Sur cette figure 1, on a représenté la fonction d'estimation FE (généralement mise en oeuvre par filtrage de Kalman) qui permet à partir de mesures satellitaires GNSS, de mesures ADR (Air Data Reference) issues par exemple d'un baro-altimètre et de mesures IRS (Inertial Reference System) issues d'une centrale inertielle, ainsi que des modèles d'erreur associés à ces mesures, de produire les estimées de états de navigation (positions, vitesses, attitudes) ainsi qu'un modèle des erreurs d'estimation (typiquement via une matrice de covariance). On a également représenté sur la figure 1 la fonction d'intégrité FI qui permet de calculer les limites de protection PL qui bornent les erreurs d'estimation. Plusieurs méthodes de calcul des limites de protection existent et on pourra en trouver un exemple dans le document US 5,760,737.

Le traitement des informations nécessaires et le calcul des limites de protection sont cependant relativement longs de sorte que le volume de protection calculé est fourni avec un certain retard à l'utilisateur. En outre, pour des raisons de charge de calcul, le calcul du volume de protection et la réactualisation peuvent être réalisés à une fréquence plus basse que la fréquence de calcul des états de navigation associés. Ce choix entraîne un retard entre l'instant de validité du volume de protection et l'instant de l'utilisation du volume de protection par l'utilisateur. Il en résulte que le volume de protection fourni à l'utilisateur n'est en fait pas valide compte tenu de ce retard qu'il convient donc de réduire au minimum sans toutefois pouvoir l'éliminer.

Ainsi, alors que d'un point de vue opérationnel les estimées des états de navigation et les limites de protection associées devraient correspondre au même instant de validité, les contraintes temps-réel affectent la validité des limites de protection (celles-ci peuvent souffrir d'un retard allant jusqu'à un cycle de calcul de la fonction d'estimation). La validité des limites de protection peut également être affectée du fait de l'asynchronisme entre les différents systèmes de navigation (généralement trois) embarqués au sein du porteur.

Pour répondre aux contraintes de validité temporelle liées aux asynchronismes inter-systèmes de navigation, il est envisagé d'extrapoler les limites de protection de manière à calculer une borne de l'erreur d'estimation qui soit temporellement cohérente des états de navigation à protéger.

A cet égard, il a été proposé dans le document EP 2 006 707 de réaliser une extrapolation en sortie de la fonction d'intégrité afin de compenser les retards de calcul et satisfaire ainsi une contrainte de validité temps réel. On a représenté sur la figure 2 un schéma de la solution préconisée dans ce document. Sur cette figure 2, le bloc 1 illustre la compensation des retards réalisée selon ce document sur la base des limites de protection PL(t) déterminées par la fonction d'intégrité FI et valables à un instant t pour fournir (« extrapoler ») une limite de protection PL(t+dt) valable à un instant futur t+dt.

Cette solution n'est toutefois pas totalement satisfaisante dans la mesure où elle requiert une répartition du risque d'intégrité entre les états de navigation qui consomme un pourcentage non nul de ce risque: l'allocation préconisée est ainsi de 80% du risque pour les limites de protection de position et 10% du risque pour les limites de protection de vitesse. Par ailleurs, cette solution repose sur un raisonnement purement combinatoire en faisant abstraction des modèles d'erreurs qui sont pourtant connus.

Une solution tenant compte des modèles d'erreurs est représentée sur la figure 3 où le bloc 2 met en oeuvre une extrapolation des matrices de covariance issues de la fonction d'estimation FE en utilisant l'équation de Ricatti. Par similitude avec la phase de prédiction de l'algorithme du filtrage de Kalman, il est effectivement immédiat de trouver une formule pour extrapoler la matrice de covariance. A titre d'exemple, on peut utiliser la matrice de transition courante calculée à partir de la dynamique précédente du porteur. La matrice de covariance extrapolée à l'instant futur est ensuite utilisée par la fonction d'intégrité FI pour calculer les limites de protection.Le document EP 2 081 043 fournit un exemple d'une telle solution. Comme présenté aux paragraphes [0027]-[0030], la matrice de covariance Pₖ à l'instant k est extrapolée à l'instant futur k+1 selon P⁻ₖ₊₁= ΦₖPₖΦₖ^{T} + Qₖ, où Φₖ représente la matrice de transition d'état à l'instant k, et où Qₖ représente le bruit. La matrice de transition Φₖ n'est pas constante et est appliquée à l'ensemble de la matrice de covariance Pₖ.

Cette seconde solution présente toutefois les limitations suivantes. En premier lieu, l'extrapolation n'est pas intègre dans la mesure où l'implémentation temps-réel induit l'utilisation d'une matrice de transition calculée avec la dynamique passée du porteur. Par ailleurs, la charge de calcul associée peut s'avérer limitante, notamment dans un contexte multi-navigation mettant en oeuvre une banque de filtres d'estimation (chaque filtre excluant une mesure satellitaire).

L'invention a pour objectif de répondre à la contrainte de validité temporelle des limites de protection en mettant en oeuvre une extrapolation intègre des limites de protection qui s'affranchisse des inconvénients des techniques présentées ci-dessus.

A cet effet, l'invention propose selon un premier aspect un procédé de détermination de limites de protection à un instant futur associées à des états de navigation d'un porteur, comprenant les étapes consistant à :
- estimer des états de navigation du porteur à l'instant présent,
- élaborer un modèle statistique des erreurs d'estimation des états de navigation du porteur à l'instant présent sous la forme d'une matrice de covariance,
- extrapoler à un instant futur le modèle statistique des erreurs d'estimation,
- calculer des limites de protection à l'instant futur à partir du modèle statistique extrapolé,
caractérisé en ce que l'extrapolation du modèle statistique des erreurs d'estimation met en oeuvre l'application d'une matrice de transition constante et positive à un vecteur d'écart-type construit à partir des racines carrées des éléments de la diagonale de la matrice de covariance pour propager à l'instant futur les écarts-types des états de navigation élaborés à l'instant présent.

Certains aspects préférés, mais non limitatifs, de ce procédé sont les suivants :
- les coefficients de la matrice de transition sont déterminés en fonction d'hypothèses de dynamique du porteur considérées sur un horizon temporel ;
- les hypothèses de dynamique du porteur comprennent au moins l'un des éléments suivants : vitesse sol, vitesse verticale, taux de rotation, facteur de charge horizontal et vertical ;
- on élabore une matrice de transition visant à compenser le retard de validité de la limite de protection vis-à vis des estimées des états de navigation ;
   o les coefficients de la matrice de transition sont déterminés en fonction de la dynamique maximale du porteur sur un horizon temporel correspondant à un cycle de calcul des estimées des états de navigation ;
- on élabore une matrice de transition visant à compenser le retard de validité de la limite de protection lié à l'asynchronisme entre différents systèmes de navigation embarqués au sein du porteur ;
   o les coefficients de la matrice de transition sont déterminés en fonction de la dynamique maximale du porteur sur un horizon temporel correspondant au maximum de la période d'émission des limites de protection ;
- on réalise l'extrapolation pour compenser le retard de validité lié à l'asynchronisme entre les différents systèmes de navigation sur la base des écarts-types déjà préalablement propagés à l'instant futur pour compenser le retard de validité de la limite de protection vis-à vis des estimées des états de navigation ;
- on élabore une matrice de transition visant à permettre le calcul de limites de protection prédictives à l'issue d'une mission spécifique du porteur ;
- les coefficients de la matrice de transition sont déterminés en fonction de la dynamique spécifique du porteur lors de la mission sur un horizon temporel correspondant à la durée de la mission.

Selon un second aspect, l'invention propose un système de navigation d'un porteur, comprenant :
- un module d'estimation fournissant des estimées d'états de navigation du porteur à l'instant présent et un modèle statistique des erreurs d'estimation des états de navigation du porteur à l'instant présent sous la forme d'une matrice de covariance,
- un module de calcul de limites de protection fournissant des limites de protection à partir des estimées d'états de navigation et du modèle statistique des erreurs d'estimation,
caractérisé en ce qu'il comporte un module d'extrapolation du modèle statistique des erreurs d'estimation configuré pour appliquer une matrice de transition constante et positive à un vecteur d'écarts-types construit à partir des racines carrées des éléments de la diagonale de la matrice de covariance pour propager à l'instant futur les écarts-types des états de navigation élaborés à l'instant présent, de sorte que le module de calcul de limites de protection calcule des limites de protection à l'instant futur à partir du modèle statistique extrapolé.

D'autres aspects, buts et avantages de la présente invention apparaîtront mieux à la lecture de la description détaillée suivante de formes de réalisation préférées de celle-ci, donnée à titre d'exemple non limitatif, et faite en référence aux dessins annexés sur lesquels, outre les figures 1 à 3 déjà discutées précédemment, les figures 4 et 5 sont des schémas illustrant différents modes de réalisation possible du procédé selon le premier aspect de l'invention.

L'invention concerne selon un premier aspect un procédé de détermination de limites de protection à un instant futur autour d'une position d'un porteur. On comprendra que l'invention s'étend également à un système de navigation d'un porteur configuré de manière à mettre en oeuvre le procédé selon le premier aspect de l'invention. Par ailleurs, si la vitesse du porteur est ici prise en exemple, on comprendra que l'invention s'étend également aux autres états de navigation du porteur (vitesses, attitudes) et on rappelle à ce propos que l'on associe classiquement une limite de protection à chacun des états de navigation du porteur

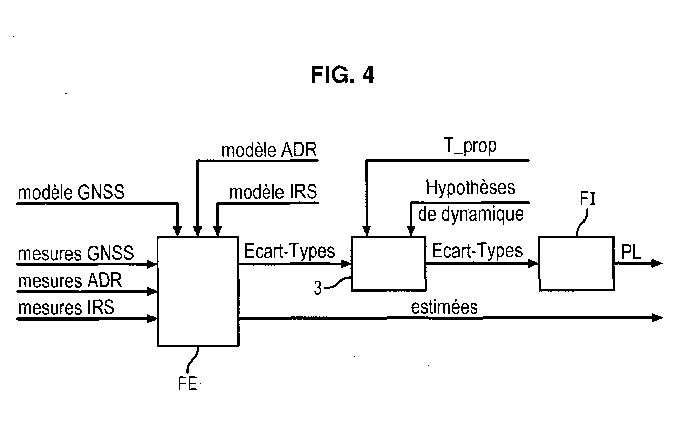

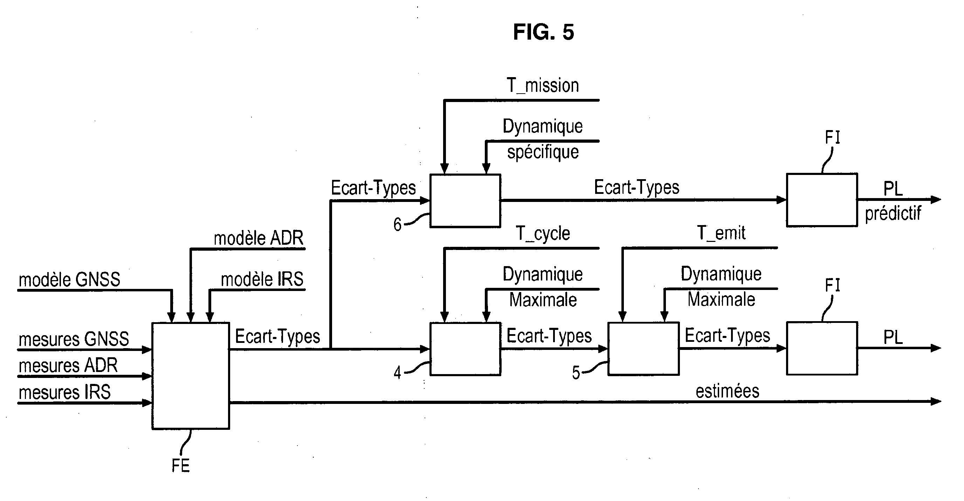

Dans le cadre de l'invention, et en référence aux figures 4 et 5, une fonction d'estimation FE (mise en oeuvre par un module d'estimation, typiquement un filtre de Kalman) estime des états de navigation du porteur à l'instant présent (positions, vitesses, attitudes) et élabore un modèle statistique des erreurs d'estimation des états de navigation du porteur à l'instant présent sous la forme d'une matrice de covariance. Comme déjà discuté précédemment, la fonction d'estimation FE utilise pour cela différentes mesures (GNSS, ADR et IRS) ainsi que des modèles d'erreur de ces mesures.

L'invention propose d'extrapoler à un instant futur le modèle statistique des erreurs d'estimation via un module d'extrapolation 3-6, et de calculer des limites de protection à l'instant futur à partir du modèle statistique extrapolé via un module de calcul de limites de protection mettant en oeuvre la fonction d'intégrité FI déjà présentée précédemment.

Afin d'extrapoler le modèle statistique des erreurs d'estimation à un instant futur, l'invention propose d'appliquer une matrice de transition constante et positive (matrice dite « majorante ») à un vecteur d'écarts-types construit à partir des racines carrées des éléments de la diagonale de la matrice de covariance pour propager à l'instant futur les écarts-types des états de navigation élaborés à l'instant présent.

On rappelle effectivement que la diagonale de la matrice de covariance est constituée de la variance de chacun des états de navigation, c'est-à-dire du carré de l'écart-type de chacun des états de navigation.

L'invention permet de répondre à différentes contraintes de validité temporelle dans la mesure où la matrice de transition est paramétrable selon l'horizon temporel considéré et la dynamique du porteur sur cet horizon.

Selon un mode de réalisation possible de l'invention, les coefficients de la matrice de transition sont ainsi déterminés en fonction d'hypothèses de dynamique du porteur considérées sur un horizon temporel.

La matrice de transition est dérivée de la matrice de transition du filtre de Kalman mais ses coefficients sont positifs et maxima (au sens d'un jeu d'hypothèses de dynamique du porteur). La valeur des coefficients peut notamment dépendre des hypothèses de dynamiques suivantes :
- Vitesse sol (éventuellement maximale), vitesse verticale (éventuellement maximale) ;
- Taux de rotation (éventuellement maximal);
- Facteur de charge horizontal et vertical (éventuellement maximaux) ;
- Et la durée d'extrapolation considérée.

On relèvera qu'en appliquant une extrapolation aux entrées de la fonction d'intégrité FI, l'invention n'implique pas, au contraire de la solution de la figure 2 qui propose une extrapolation des sorties de la fonction d'intégrité, d'allocation spécifique du risque d'intégrité entre les états de navigation. Ce qui permet (à contrainte d'extrapolation fixe) de réduire la taille des limites de protection et par conséquent d'augmenter la disponibilité par rapport à des limites d'alerte données.

Par ailleurs, en utilisant une matrice de transition constante et positive (« majorante »), l'extrapolation réalisée dans le cadre de l'invention est intègre au sens du jeu d'hypothèses de dynamique porteur donné (par exemple, dynamique maximale du porteur). En particulier, et au contraire de la solution de la figure 3 dont un exemple est donné par le document EP 2 081 043, l'extrapolation selon l'invention n'utilise pas les données de dynamique du porteur du cycle de calcul précédent et est ainsi indépendante de la dynamique passée du porteur.

Enfin, en s'appliquant uniquement à un vecteur d'écarts-types construit à partir des racines carrées des éléments de la diagonale de la matrice de covariance, l'invention présente une complexité algorithmique optimisée (par rapport notamment au double produit matriciel de l'extrapolation utilisant l'équation de Riccati).

La figure 5 illustre un mode de réalisation possible de l'invention dans lequel l'extrapolation intègre des écart-types pour le calcul des limites de protection est réalisée plusieurs fois pour répondre à différentes contraintes de validité temporelle. On comprendra cependant que chacune des extrapolations présentées par la suite peuvent être mises en oeuvre de manière indépendante, ou en complément d'autres types d'extrapolation.

Une première extrapolation est réalisée par un module d'extrapolation 4 à l'aide d'une matrice de transition élaborée de manière à compenser le retard de validité des limites de protection vis-à vis des estimées des états de navigation.

Ce retard induit par l'implémentation temps-réel de l'algorithme de filtrage de Kalman introduit généralement un cycle de Kalman de retard dans la validité de la matrice de covariance et par conséquent dans la validité des limites de protection construites à partir de cette matrice de covariance.

Les coefficients de la matrice de transition sont plus précisément déterminés en fonction de la dynamique maximale du porteur sur un horizon temporel T_cycle correspondant à un cycle de calcul des estimées des états de navigation. Les écarts-types à l'instant t sont ainsi extrapolés (vieillis) à l'instant futur t+ T_cycle en considérant que dans l'intervalle le porteur a nécessairement une dynamique bornée par sa dynamique maximale.

Une seconde extrapolation est réalisée par un module d'extrapolation 5 à l'aide d'une matrice de transition élaborée de manière à compenser le retard de validité des limites de protection lié à l'asynchronisme entre différents systèmes de navigation embarqués au sein du porteur. Sur la figure 5, cette seconde extrapolation est réalisée sur la base des écarts-types extrapolés par le module d'extrapolation 5 compensant les retards temps-réel de calcul. On comprendra cependant que la compensation des asynchronismes inter-systèmes de navigation peut être mise en oeuvre indépendamment de la compensation des retards temps-réel de calcul, sur la base des écarts-types directement en sortie de la fonction d'estimation FE.

Le calcul des limites de protection consolidées entre des systèmes de navigation asynchrones engendre un retard de validité égal au maximum à la période d'émission des limites de protection. Les coefficients de la matrice de transition sont ainsi déterminés en fonction de la dynamique maximale du porteur sur un horizon temporel T_emit correspondant à la période d'émission des limites de protection. Les écarts-types à l'instant t sont ainsi extrapolés (vieillis) à l'instant futur (t+ T_emit) en considérant que dans l'intervalle le porteur a une dynamique nécessairement bornée par sa dynamique maximale.

Une troisième extrapolation est réalisée par un module d'extrapolation 6 à l'aide d'une matrice de transition élaborée de manière à permettre le calcul de limites de protection prédictives à l'issue d'une mission spécifique du porteur.

L'aviation moderne requiert effectivement le calcul de limites de protection prédictives dans le cadre de mission spécifique (par exemple demi-tour). Les coefficients de la matrice de transition sont ainsi déterminés en fonction de la dynamique spécifique du porteur lors de la mission (la dynamique étant typiquement spécifiée par l'avionneur, par exemple un taux de roulis maximal lors d'un demi-tour) sur un horizon temporel T_mission correspondant à la durée de la mission (réalisation du demi-tour par exemple). Les écarts-types à l'instant t sont ainsi extrapolés (vieillis) à l'instant futur (t+ T_mission) en considérant que dans l'intervalle le porteur a une dynamique bornée par ladite dynamique spécifique.

## Revendications

1. Procédé de détermination de limites de protection associées à des états de navigation d'un porteur, comprenant les étapes consistant à :
- estimer des états de navigation du porteur à un instant présent,
- élaborer un modèle statistique des erreurs d'estimation des états de navigation du porteur à l'instant présent sous la forme d'une matrice de covariance,
- extrapoler à un instant futur le modèle statistique des erreurs d'estimation,
- calculer une limite de protection à l'instant futur à partir du modèle statistique extrapolé,
**caractérisé en ce que** l'extrapolation du modèle statistique des erreurs d'estimation met en oeuvre l'application d'une matrice de transition constante et positive à un vecteur d'écart-type construit à partir des racines carrées des éléments de la diagonale de la matrice de covariance pour propager à l'instant futur les écarts-types des états de navigation élaborés à l'instant présent de manière indépendante de la dynamique passée du porteur.

2. Procédé selon la revendication 1, dans lequel les coefficients de la matrice de transition sont déterminés en fonction d'hypothèses de dynamique du porteur considérées sur un horizon temporel.

3. Procédé selon la revendication 2, dans lequel les hypothèses de dynamique du porteur comprennent au moins l'un des éléments suivants : vitesse sol, vitesse verticale, taux de rotation, facteur de charge horizontal et vertical.

4. Procédé selon l'une des revendications 1 à 3, comprenant l'élaboration d'une matrice de transition visant à compenser le retard de validité des limites de protection vis-à vis des estimées des états de navigation.

5. Procédé selon la revendication 4, dans lequel les coefficients de la matrice de transition sont déterminés en fonction de la dynamique maximale du porteur sur un horizon temporel correspondant à un cycle de calcul des estimées des états de navigation.

6. Procédé selon l'une des revendications 1 à 3, comprenant l'élaboration d'une matrice de transition visant à compenser le retard de validité des limites de protection lié à l'asynchronisme entre différents systèmes de navigation embarqués au sein du porteur.

7. Procédé selon la revendication 6, dans lequel les coefficients de la matrice de transition sont déterminés en fonction de la dynamique maximale du porteur sur un horizon temporel correspondant au maximum de la période d'émission des limites de protection.

8. Procédé selon l'une des revendications 6 ou 7, dans lequel on réalise l'extrapolation pour compenser le retard de validité lié à l'asynchronisme entre les différents systèmes de navigation sur la base des écarts-types déjà préalablement propagés à l'instant futur conformément à l'une des revendications 4 ou 5 pour compenser le retard de validité de la limite de protection vis-à vis des estimées des états de navigation.

9. Procédé selon l'une des revendications 1 à 3, comprenant l'élaboration d'une matrice de transition visant à permettre le calcul de limites de protection prédictives à l'issue d'une mission spécifique du porteur.

10. Procédé selon la revendication 9, dans lequel les coefficients de la matrice de transition sont déterminés en fonction de la dynamique spécifique du porteur lors de la mission sur un horizon temporel correspondant à la durée de la mission.

11. Système de navigation d'un porteur, comprenant :
- un module d'estimation (FE) fournissant des estimées d'états de navigation du porteur à l'instant présent et un modèle statistique des erreurs d'estimation des états de navigation du porteur à l'instant présent sous la forme d'une matrice de covariance,
- un module de calcul de limites de protection (FI) fournissant des limites de protection à partir des estimées d'états de navigation et du modèle statistique des erreurs d'estimation,
**caractérisé en ce qu'**il comporte un module d'extrapolation du modèle statistique des erreurs d'estimation (3-6) configuré pour appliquer une matrice de transition constante et positive à un vecteur d'écarts-types construit à partir des racines carrées des éléments de la diagonale de la matrice de covariance pour propager à l'instant futur les écarts-types des états de navigation élaborés à l'instant présent de manière indépendante de la dynamique passée du porteur, de sorte que le module de calcul de limites de protection calcule des limites de protection à l'instant futur à partir du modèle statistique extrapolé.

## Patentansprüche

1. Verfahren zur Bestimmung von Schutzgrenzen, die Navigationszuständen eines Trägers zugeordnet sind, das die folgenden Schritte umfasst:
- Schätzen der Navigationszustände des Trägers zu einem gegenwärtigen Zeitpunkt,
- Erstellen eines statistischen Modells der Fehler bei der Schätzung der Navigationszustände des Trägers zu dem gegenwärtigen Zeitpunkt in Form einer Kovarianzmatrix,
- Extrapolieren des statistischen Modells der Schätzungsfehler auf einen zukünftigen Zeitpunkt,
- Berechnen einer Schutzgrenze zu dem zukünftigen Zeitpunkt ausgehend von dem extrapolierten statistischen Modell,
**dadurch gekennzeichnet, dass** die Extrapolation des statistischen Modells der Schätzungsfehler die Anwendung einer konstanten und positiven Transitionsmatrix auf einen Typabweichungsvektor durchführt, der ausgehend von den Quadratwurzeln der Elemente der Diagonale der Kovarianzmatrix gebildet wurde, um die Typabweichungen der Navigationszustände, die zu dem gegenwärtigen Zeitpunkt erstellt wurden, unabhängig von der vergangenen Dynamik des Trägers auf den zukünftigen Zeitpunkt zu propagieren.

2. Verfahren nach Anspruch 1, bei dem die Koeffizienten der Transitionsmatrix in Abhängigkeit von Dynamikhypothesen des Trägers, die über einen Zeithorizont erwogen werden, bestimmt werden.

3. Verfahren nach Anspruch 2, bei dem die Dynamikhypothesen des Trägers mindestens eines der folgenden Elemente umfassen: Bodengeschwindigkeit, vertikale Geschwindigkeit, Rotationsrate, horizontaler und vertikaler Lastfaktor.

4. Verfahren nach einem der Ansprüche 1 bis 3, umfassend die Erstellung einer Transitionsmatrix, die dazu dient, die Validitätsverzögerung der Schutzgrenzen gegenüber den Schätzungen der Navigationszustände zu kompensieren.

5. Verfahren nach Anspruch 4, bei dem die Koeffizienten der Transitionsmatrix in Abhängigkeit von der maximalen Dynamik des Trägers über einen Zeithorizont bestimmt werden, der einem Rechenzyklus der Schätzungen der Navigationszustände entspricht.

6. Verfahren nach einem der Ansprüche 1 bis 3, umfassend die Erstellung einer Transitionsmatrix, die dazu dient, die Validitätsverzögerung der Schutzgrenzen, die mit dem Asynchronismus zwischen verschiedenen Navigationssystemen an Bord des Trägers verbunden ist, zu kompensieren.

7. Verfahren nach Anspruch 6, bei dem die Koeffizienten der Transitionsmatrix in Abhängigkeit von der maximalen Dynamik des Trägers über einen Zeithorizont bestimmt werden, der dem Maximum der Emissionsperiode der Schutzgrenzen entspricht.

8. Verfahren nach einem der Ansprüche 6 oder 7, bei dem die Extrapolation erfolgt, um die Validitätsverzögerung, die mit dem Asynchronismus zwischen den verschiedenen Navigationssystemen verbunden ist, auf der Basis der Typabweichungen, die gemäß einem der Ansprüche 4 oder 5 zuvor bereits auf den zukünftigen Zeitpunkt propagiert wurden, zu kompensieren, um die Validitätsverzögerung der Schutzgrenze gegenüber den Schätzungen der Navigationszustände zu kompensieren.

9. Verfahren nach einem der Ansprüche 1 bis 3, umfassend die Erstellung einer Transitionsmatrix, die dazu dient, die Berechnung von prädiktiven Schutzgrenzen am Ende einer spezifischen Mission des Trägers zu ermöglichen.

10. Verfahren nach Anspruch 9, bei dem die Koeffizienten der Transitionsmatrix in Abhängigkeit von der spezifischen Dynamik des Trägers bei der Mission über einen Zeithorizont bestimmt werden, welcher der Dauer der Mission entspricht.

11. Navigationssystem eines Trägers, umfassend:
- ein Schätzungsmodul (FE), das Schätzungen von Navigationszuständen des Trägers zu dem gegenwärtigen Zeitpunkt und ein statistisches Modell der Fehler bei der Schätzung der Navigationszustände des Trägers zu dem gegenwärtigen Zeitpunkt in Form einer Kovarianzmatrix bereitstellt,
- ein Modul zur Berechnung von Schutzgrenzen (FI), das Schutzgrenzen ausgehend von den Schätzungen der Navigationszustände und von dem statistischen Modell der Schätzungsfehler bereitstellt,
**dadurch gekennzeichnet, dass** es ein Modul zur Extrapolation des statistischen Modells der Schätzungsfehler (3-6) aufweist, das ausgebildet ist, um eine konstante und positive Transitionsmatrix auf einen Typabweichungsvektor anzuwenden, der ausgehend von den Quadratwurzeln der Elemente der Diagonale der Kovarianzmatrix gebildet wurde, um die Typabweichungen der Navigationszustände, die zu dem gegenwärtigen Zeitpunkt erstellt wurden, unabhängig von der vergangenen Dynamik des Trägers auf den zukünftigen Zeitpunkt so zu propagieren, dass das Modul zur Berechnung von Schutzgrenzen ausgehend von dem extrapolierten statistischen Modell Schutzgrenzen zu dem zukünftigen Zeitpunkt berechnet.

## Claims

1. Method for determining protection limits associated with navigation states of a carrier, including steps consisting of:
- estimating navigation states of the carrier at a present moment,
- producing a statistical model of estimation errors of navigation states of the carrier at the present moment in the form of a covariance matrix,
- extrapolating the statistical model of estimation errors to a future moment,
- calculating a protection limit at a future moment using the extrapolated statistical model,
**characterised in that** extrapolation of the statistical estimation error model applies a constant positive transition matrix to a standard deviation vector constructed from the square roots of the elements of the diagonal of the covariance matrix to propagate standard deviations of navigation states produced at the present moment, to a future moment, independently of the past dynamics of the carrier.

2. Method according to claim 1, in which the coefficients of the transition matrix are determined as a function of the assumptions of dynamics of the carrier considered over a time horizon.

3. Method according to claim 2, in which the assumptions of dynamics of the carrier include at least one of the following elements: the ground speed, the vertical speed, rotation rate, horizontal and vertical load factors.

4. Method according to one of claims 1 to 3, comprising production of a transition matrix to compensate for the validity delay of the protection limits for estimates of navigation states.

5. Method according to claim 4, in which the coefficients of the transition matrix are determined as a function of the maximum dynamics of the carrier over a time horizon corresponding to one calculation cycle of estimates of navigation states.

6. Method according to one of claims 1 to 3, comprising the production of a transition matrix to compensate for the validity delay of the protection limits related to asynchronism between different navigation systems onboard the carrier.

7. Method according to claim 6, in which the coefficients of the transition matrix are determined as a function of the maximum dynamics of the carrier over a time horizon corresponding to the maximum emission period of the protection limits.

8. Method according to one of claims 6 or 7, in which the extrapolation is made to compensate for the validity delay related to asynchronism between the different navigation systems based on standard deviations previously propagated to the future moment according to one of claims 4 or 5, to compensate for the validity delay of the protection limit for estimates of navigation states.

9. Method according to one of claims 1 to 3, comprising production of a transition matrix to calculate predictive protection limits after a specific carrier mission.

10. Method according to claim 9, in which the coefficients of the transition matrix are determined as a function of the specific dynamics of the carrier during the mission, over a time horizon corresponding to the duration of the mission.

11. Carrier navigation system comprising:
- an estimation module (FE) providing navigation state estimates of the carrier at the present moment and a statistical model for estimation errors of the carrier navigation states at the present moment in the form of a covariance matrix,
- a module to calculate protection limits (FI) providing protection limits starting from estimates of navigation states and the statistical estimation errors model,
**characterised in that** it comprises an extrapolation module of the statistical model of estimation errors (3-6) configured to apply a constant positive transition matrix to a vector of standard deviations constructed from the square roots of the elements of the diagonal of the covariance matrix to propagate standard deviations of navigation states produced at the present moment to a future moment, independently of the past dynamics of the carrier, such that the protection limits calculation module calculates the protection limits at the future moment starting from the extrapolated statistical model.
